Europäisches Patentamt

(19) **European Patent Office**

Office européen des brevets

(11) Veröffentlichungsnummer: **0 054 726**
**B1**

(12) **EUROPÄISCHE PATENTSCHRIFT**

(45) Veröffentlichungstag der Patentschrift:
27.03.85

(51) Int. Cl.⁴: **H 02 B 13/02**

(21) Anmeldenummer: 81109354.1

(22) Anmeldetag: 30.10.81

(54) Anordnung zur Erdung der stromführenden Teile einer gekapselten Schaltanlage und zur Prüfung der an die Schaltanlage angeschlossenen Kabel.

(30) Priorität: 22.12.80 DE 3048389

(43) Veröffentlichungstag der Anmeldung:
30.06.82 Patentblatt 82/26

(45) Bekanntmachung des Hinweises auf die Patenterteilung:
27.03.85 Patentblatt 85/13

(84) Benannte Vertragsstaaten:
AT BE CH FR GB IT LI LU NL SE

(56) Entgegenhaltungen:
DE - A - 2 108 775
FR - A - 2 351 522
FR - A - 2 365 227

(73) Patentinhaber: **Karl Pfisterer Elektrotechnische Spezialartikel GmbH & Co. KG, Augsburger Strasse 375, D-7000 Stuttgart 60 (DE)**

(72) Erfinder: **Bogner, Albert, Ing. grad., Weberstrasse 18, D-7067 Plüderhausen (DE)**

(74) Vertreter: **Patentanwälte Phys. Bartels, Dipl.-Ing. Fink Dipl.-Ing. Held, Lange Strasse 51, D-7000 Stuttgart 1 (DE)**

BUNDESDRUCKEREI BERLIN

## Beschreibung

Die Erfindung betrifft eine Anordnung zur Erdung der stromführenden Teile einer gekapselten Schaltanlage und zur Prüfung der an die Schaltanlage angeschlossenen Kabel, welche Anordnung die Merkmale des Oberbegriffs des Anspruches 1 aufweist.

Bei einer bekannten Anordnung dieser Art (FR-A-2 351 522) sind alle Erdungsschalter außerhalb des Gehäuses angeordnet. Ihr festes Kontaktstück wird durch einen von einem Durchführungsisolator getragenen Messerkontakt, ihr bewegliches Kontaktstück durch ein Schaltmesser gebildet, das an einer geerdeten Schutzhaube schwenkbar gelagert ist, die am Gehäuse befestigt ist und den Erdungsschalter nach oben und vorne abdeckt. Ein Schlitz in dieser Schutzhaube erlaubt den Durchgriff für eine Betätigung des Erdungsschalters, bei geöffnetem Schalter das Ansetzen einer Klemmvorrichtung an das feste Kontaktstück zum Anlegen einer Prüfspannung. In vielen Fällen ist die Anordnung der Erdungsschalter außerhalb des Gehäuses sowohl aus Platzgründen als vor allem auch aus Sicherheitsgründen unerwünscht. Ferner ist sowohl die hier vorgesehene Art der Betätigung des Erdungsschalters als auch das Anschließen der Prüfvorrichtung unbequem und nicht ohne Sicherheitsrisiko.

Es ist ferner ein an die Wand eines metallischen Gehäuses anzubauender Erdungsschalter bekannt (FR-A-2 365 227), der einen eine Öffnung der Gehäusewand durchdringenden Schaltstab aufweist, welcher längsverschiebbar in einer isoliert an der Gehäusewand befestigten Kontaktanordnung ständig geführt ist. Diese Kontaktanordnung ist über isoliert aus dem Gehäuse herausgeführte Verbindungsleitungen sowie eine lösbare Verbindungskappe normalerweise geerdet. Für den Fall einer Spannungsprüfung ist nach dem Entfernen der Verbindungskappe eine flexible Anschlußleitung eines Spannungsprüfers an das freie Ende der Verbindungsleitung anschließbar. Die Durchführung einer Spannungsprüfung ist deshalb nicht risikofrei möglich. Ferner ist dieser Erdungsschalter aufwendig. Da seine Kontaktstücke außerhalb des ihn tragenden Gehäuses angeordnet sind, ist er außerdem überall dort ungeeignet, wo wenig Platz zur Verfügung steht und hohe Sicherheitsanforderungen gestellt werden, wie dies in der Regel bei gekapselten Schaltanlagen der Fall ist, bei welchen die Kabel mittels Kabelstecker angeschlossen werden.

Bekannt ist weiterhin ein Kabelendverschluß in Form eines Kabelsteckers für Hochspannungskabel (DE-A-2 108 775). In diesen Endverschluß ist ein Erdungsschalter integriert. Derartige Kabelstecker haben einen hohen Aufwand für die Möglichkeit, die Kabel zu erden, und außerdem fehlt es bei diesen Endverschlüssen an einer Kabelprüfmöglichkeit.

Der Erfindung liegt die Aufgabe zugrunde, eine Anordnung zur Erdung der stromführenden Teile einer gekapselten Schaltanlage und zur Prüfung der an die Schaltanlage angeschlossenen Kabel zu schaffen, die sich mit möglichst geringem Aufwand und möglichst geringem Raumbedarf realisieren läßt und eine Kabelfehlerortung von der Schaltanlage aus in gefahr- und risikoloser Weise ermöglicht.

Diese Aufgabe löst eine Anordnung, welche die Merkmale des Anspruches 1 aufweist.

Dadurch, daß die Erdungsvorrichtung eine über die Isolierbuchse an der Wand des Gehäuses befestigte den Kontaktkörper bildende Steckbuchse mit zu einer in der Gehäusewand vorgesehenen Öffnung hin gerichteten Stecköffnung und einen Erdungsstecker umfaßt, der im eingesteckten Zustand nicht nur die Erdverbindung herstellt, sondern die Isolierbuchse auch elektrisch dicht verschließt, ist sowohl der Aufwand als auch der Platzbedarf für die Erdungsvorrichtung minimal. Außerdem ist eine risikolose und einfache Betätigung möglich. Für eine Kabelfehlerprüfung braucht nur der Erdungsstecker durch einen an seiner Stelle in die Isolier- und die Steckbuchse einzusteckenden Prüfstecker ersetzt zu werden. Daher ist auch eine Kabelfehlerprüfung in einfacher und risikoloser Weise möglich, wobei außerdem der Platzbedarf nicht vergrößert ist und auch der Aufwand minimal gehalten wird. Hierzu trägt auch bei, daß die Prüfvorrichtung insoweit mit der Erdungsvorrichtung vereinigt ist, als Isolier- und auch Steckbuchse sowohl der Aufnahme des Erdungssteckers als auch der Aufnahme des Prüfsteckers dienen, und daß es sich bei allen diesen Bauteilen um einfache Elemente handelt. Vorteilhaft ist ferner, daß die die Steckbuchse tragende Isolierbuchse nicht für eine Dauerbeanspruchung durch die Betriebsspannung ausgebildet zu sein braucht, sondern nur für die bei einer Fehlerortung verwendete Prüfspannung, was zu geringen Kosten und vor allem zu einer kurzen Bauweise führt. Schließlich ist es vorteilhaft, daß dank des geringen Raumbedarfs und der konstruktiv einfachen Lösung in der Regel auch eine Nachrüstung einer Schaltanlage mit der erfindungsgemäßen Anordnung ohne Schwierigkeiten möglich ist.

Damit die erfindungsgemäße Anordnung auch für Schaltanlagen verwendbar ist, die mit Isoliergas gefüllt sind, liegen vorzugsweise die auf je eine der Öffnungen der Gehäusewand ausgerichteten Isolierbuchsen unter Zwischenlage eines Dichtungsringes gasdicht an der Gehäusewand an und der als Steckbuchse ausgebildete Kontaktkörper ist dabei gasdicht durch das dem Gehäuseinneren zugewandte Ende der Isolierbuchse hindurchgeführt.

Aus Platzgründen und im Hinblick auf eine möglichst einfache Handhabung der Anordnung ist bei einer bevorzugten Ausführungsform im Bereich der an der Gehäusewand befestigten Stirnseite der Isolierbuchse konzentrisch zu deren Längsachse ein auf Erdpotential liegender Gegenkontaktkörper vorgesehen, den der in die Isolierbuchse eingesteckte Erdungsstecker unter Herstellung einer elektrisch leitenden Verbindung mit der Steckbuchse kontaktiert. Dieser Gegenkontaktkörper ist vorzugsweise eine an der Außenseite der Gehäusewand festgelegte Ringscheibe und der Erdungsstecker weist deshalb an einem Ende eines elektrisch gut leitenden Bolzens eine an diese Ringscheibe andrückbare Kontaktscheibe auf, während das andere Ende des Bolzens einen in die Steckbuchse einsteckbaren Steckkontakt trägt.

Aus Sicherheitsgründen ist es zweckmäßig, wenn auch der Prüfstecker im Anschluß an einen in die Steckbuchse einsteckbaren Kontaktbolzen einen Dichtungskörper aufweist, der im eingesteckten Zustand an der Innenwandung der Insolierbuchse anliegt und die Isolierbuchse nach außen hin »elektrisch dicht« verschließt, also auch Kriechströme mit Sicherheit verhindert.

Im folgenden ist die Erfindung anhand eines in der Zeichnung dargestellten Ausführungsbeispiels im einzelnen erläutert. Es zeigt
Fig. 1 eine schematisch und aufgebrochen dargestellte Seitenansicht des Ausführungsbeispiels,
Fig. 2 eine andere, ebenfalls schematisch und seitlich offen sowie teilweise im Schnitt dargestellte Seitenansicht des Ausführungsbeispiels,
Fig. 3 einen in größerem Maßstab dargestellten Ausschnitt aus Fig. 2,
Fig. 4 eine Ansicht und Darstellung des Ausführungsbeispiels entsprechend Fig. 2 bei geschlossenen Erdungsschaltern und abgezogenen Erdungssteckern,
Fig. 5 eine Ansicht und Darstellung des Ausführungsbeispiels entsprechend Fig. 4 bei eingestecktem Prüfstecker für eine Kabelfehlerortung.

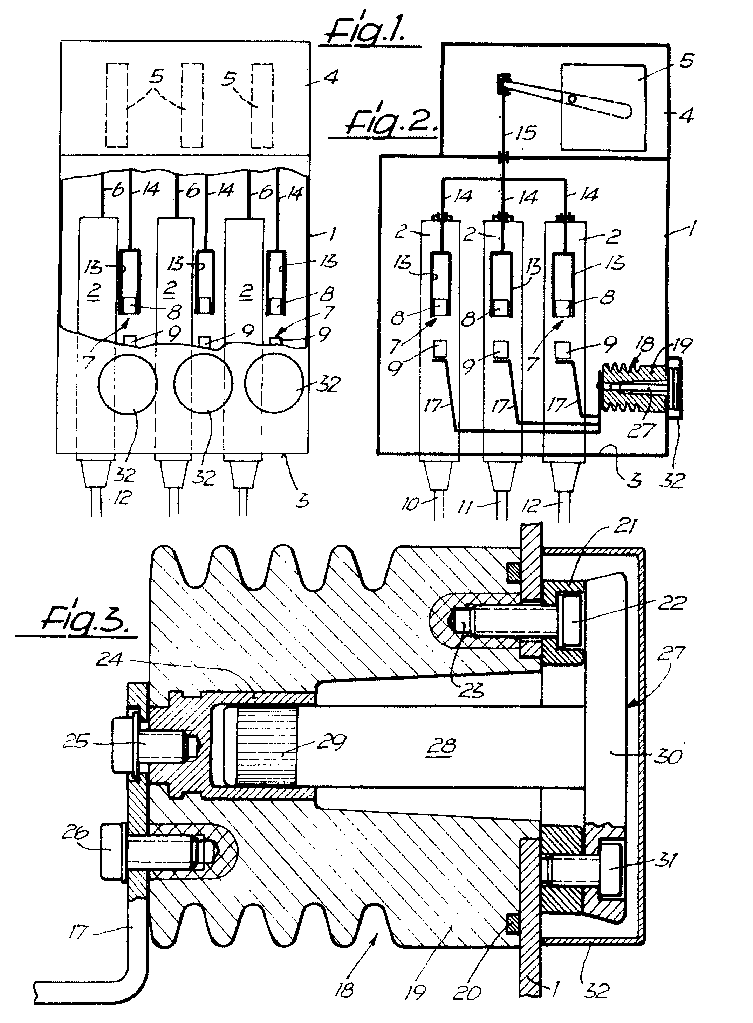

Ein metallgekapselter Mittelspannungsschalter enthält, wie die Fig. 1 und 2 zeigen, in einem metallischen, quaderförmigen Gehäuse 1, das mit SF$_6$-Gas gefüllt ist, neun gleich ausgebildete, einpolige Schalteinheiten 2, die eine zylindrische Außenform haben und mit ihrer einen Stirnseite am Boden 3 des Gehäuses 1 befestigt sind. Die Schalteinheiten 2, die in drei zueinander parallelen Reihen angeordnet sind, bilden drei dreipolige Schalter. Für jeden dieser drei Schalter ist in einem auf das Gehäuse 1 aufgesetzten Antriebsgehäuse 4 je ein Schalterantrieb 5 vorgesehen, der über eine nicht dargestellte, von oben her in das Gehäuse 1 eingeführte Schaltstange, mit der über eine Querschiene die Betätigungsstangen 6 der drei zu diesem Schalter gehörenden Schalteinheiten 2 verbunden sind, diese Schalteinheiten gleichzeitig schaltet.

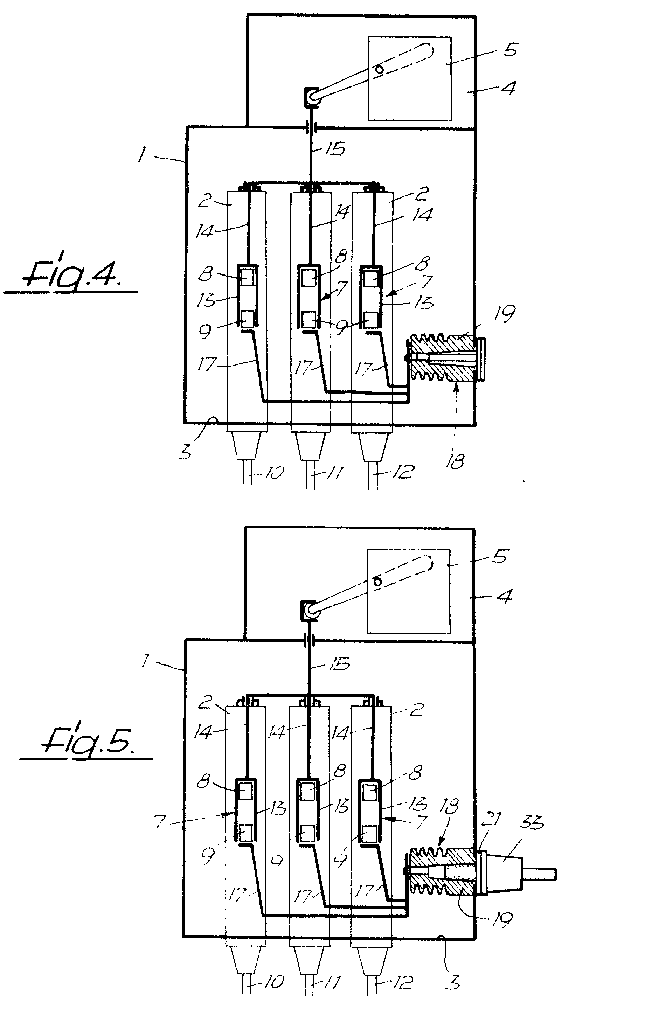

Jeder der Schalteinheiten 2 ist ein als Ganzes mit 7 bezeichneter Erdungsschalter zugeordnet, der, wie beispielsweise die Fig. 1 und 2 zeigen, seitlich neben der Schalteinheit 2 sowie in deren Längsrichtung im Abstand voneinander angeordnete und mit der Schalteinheit verbundene, also feste Kontaktstücke 8 bzw. 9 aufweist. Das obere Kontaktstück 8 steht in leitender Verbindung mit demjenigen festen Kontaktstück der Schalteinheit 2, das seinerseits leitend mit einem an diese Schalteinheit angeschlossenen, einadrigen Kabel in Verbindung steht. Die drei einadrigen Kabel, welche an die zum selben Schalter gehörenden Schalteinheiten angeschlossen sind, sind mit 10, 11 und 12 gekennzeichnet. Die Verbindung der Kabel 10, 11 und 12 mit den zugeordneten Schalteinheiten erfolgt im Ausführungsbeispiel über Kabelstecker, welche in Steckbuchsen an dem mit dem Boden 3 verbundenen Ende eingesteckt werden. Weiterhin weist jeder der gleich ausgebildeten Erdungsschalter 7 ein bewegliches Kontaktstück 13 auf, das mittels einer parallel zur Längsachse der zugeordneten Schalteinheit 2 liegenden und in ihrer Längsachse verschiebbaren Betätigungsstange 14 zwischen einer in den Fig. 1 und 2 dargestellten Position, in der es nur das obere Kontaktstück 8 kontaktiert, und einer in den Fig. 4 und 5 dargestellten Position, in welcher es die beiden Kontaktstücke 8 und 9 leitend miteinander verbindet, bewegbar ist. Wie Fig. 2 zeigt, sind die Betätigungsstangen 14 der zum selben Schalter gehörenden Erdungsschalter über eine Querstange mechanisch fest miteinander verbunden. Die beweglichen Kontaktstücke 13 müssen jedoch elektrisch gegeneinander isoliert sein, weshalb entweder die Betätigungsstangen 14 zumindest auf einem Teil ihrer Länge und/oder die Querstange isolierend sind. Um diese drei Erdungsschalter mittels des Schalterantriebs 5 des zugeordneten Schalters betätigen zu können, ist eine neben der Schaltstange dieses Schalters und parallel zu ihr angeordnete Schubstange 15 von oben her in das Gehäuse 1 eingeführt und über die Querstange mit den Betätigungsstangen 14 mechanisch fest verbunden. Der Schaltantrieb 5 kann durch eine Schwenkbewegung um eine vertikale Achse wahlweise mit der Schubstange 15 oder der Schaltstange gekuppelt werden, weshalb im Ausführungsbeispiel diese beiden Stangen an ihrem oberen Ende eine zum Schalterantrieb 5 hin offene Klaue haben, in welche das freie Ende eines Schwenkhebels des Schalterantriebs eingeführt werden kann.

Dasjenige feste Kontaktstück 9 jedes Erdungsschalters 7, das nur bei geschlossenem Erdungsschalter in leitender Verbindung mit dem an die zugeordnete Schalteinheit 2 angeschlossenen Kabel steht, bei geöffnetem Erdungsschalter jedoch keine Spannung führt, ist im Ausführungsbeispiel bei den in Fig. 2 nicht sichtbaren Erdungsschaltern 7 über eine kurze Verbindungsleitung mit dem Boden 3 des Gehäuses 1 elektrisch leitend verbunden und damit ständig geerdet. Hingegen sind bei den in Fig. 2 sichtbaren Erdungsschaltern, die einem der drei dreipoligen Schalter zugeordnet sind, diese Kontaktstücke 9 über beispielsweise als Schienen ausgebildete Erdungsleitungen 17 an je einen als Isolierbuchse 19 ausgebildeten Isolierkörper 18 angeschlossen, welche in eine Wand des Gehäuses 1, im Ausführungsbeispiel die Vorderwand, eingesetzt sind. Selbstverständlich wäre es möglich, in entsprechender Weise auch die Kontaktstücke 9 der anderen Erdungsschalter mit je einer derartigen Isolierbuchse 19 zu verbinden, falls der Wunsch besteht, eine Fehlerortung auch bei den an die zugehörigen Schalteinheiten angeschlossenen Kabel vornehmen zu können.

Fig. 3 zeigt eine Isolierbuchse 19, die außen zur Verlängerung der Kriechwege ringnutenförmige Einschnürungen aufweisen kann, die unter Zwischenlage eines Dichtungsringes 20 mit ihrer einen Stirnfläche an der Innenseite der Gehäusewandung anliegt, welche mit einer auf den zentralen Längskanal der Isolierbuchse 19 ausgerichteten, kreisförmigen Öffnung versehen ist, in welche im Ausführungsbeispiel ein Kragen der Isolierbuchse 19 eingreift. Eine konzentrisch zur Isolierbuchse 19 angeordnete, metallische Ringscheibe 21 liegt an der Außenseite der Gehäusewandung an und ist mit dieser elektrisch leitend verbunden. Verbindungsschrauben 22 durchdringen Bohrungen der Ringscheibe 21 sowie der Gehäusewandung und greifen in Gewindebuchsen 23 ein, welche in die Isolierbuchse 19 eingebettet sind. Die Verbindungsschrauben 22 pressen deshalb sowohl die Ringscheibe 21 als auch die Isolierbuchse 19 gegen die Wandung des Gehäuses 1. Die andere Stirnfläche der Isolierbuchse 19 durchdringt gasdicht ein Kontaktkörper, dessen gegen die Gehäusewandung weisender Endabschnitt eine in der Längsachse der Isolierbuchse 19 liegende Steckbuchse 24 bildet. Der andere, zum Gehäuseinneren hin freiliegende Endabschnitt dieses Kontaktkörpers bildet eine Anlage- und Kontaktfläche für die Erdungsleitung 17, die mittels einer in den Kontaktkörper eindringenden Schraube 25 mechanisch fest und elektrisch leitend mit dem Kontaktkörper und damit auch der Steckbuchse 24 verbunden ist. Eine zusätzliche Schraube 26 verbindet die Erdungsleitung 17 außerdem unmittelbar mit der Isolierbuchse 19, um hohe mechanische Kräfte, wie sie beispielsweise auftreten, wenn die Kabel 10, 11 und 12 unter Spannung gesetzt werden, während die Erdungsschalter 7 geschlossen sind, sicher zu beherrschen. Die elektrische Beanspruchung der Isolierbuchsen 19 ist jedoch gering, da die Erdungsleitungen 17 dann, wenn die Erdungsschalter 7 geöffnet sind, was während des Betriebs der Fall ist, keine Spannung führen. Daher ist die Baugröße der Isolierbuchse 19 einschließlich der axialen Länge wesentlich geringer, als sie sein müßte, wenn die Erdungsleitungen 17 ständig die Betriebsspannung führen würden, während die Kabel unter Betriebsspannung stehen. Die Abmessungen der Isolierbuchsen 19 sind deshalb im Vergleich zu den Abmessungen der Schalteinheiten 2 und des Gehäuses 1 wesentlich kleiner als die schematische Darstellung in den Fig. 2, 4 und 5 zeigt.

Jeder Isolierbuchse 19 ist ein Erdungsstecker 27 zugeordnet, der im eingesteckten Zustand die Steckbuchse 24 elektrisch leitend mit der Ringscheibe 21 verbindet und damit die an die Steckbuchse angeschlossene Erdungsleitung 17 auf Erdpotential hält. Die drei in Fig. 2 sichtbaren Kontaktstücke 9 sind also, wenn die Erdungsstecker 27 in die Isolierbuchsen 19 eingesteckt sind, sowohl geerdet, als auch kurzgeschlossen. Das Schließen der Erdungsschalter 7 hat deshalb bei eingesetzten Erdungssteckern 27 ein Erden und Kurzschließen der Kabel 10 bis 12 zur Folge. Jeder der gleich ausgebildeten Erdungsstecker 27 weist, wie Fig. 3 zeigt, einen elektrisch gut leitenden Steckbolzen 28 auf, dessen eines im eingesteckten Zustand in die Steckbuchse 24 eingreifendes Ende ein Multikontaktelement 29 trägt, das durch die Bildung eines Viellinienkontaktes einen guten Kontakt zwischen Steckbuchse 24 und Steckbolzen 28 gewährleistet. Das andere Ende des Steckbolzens 28 ist mit einer Kontaktplatte 30 fest verbunden, deren Außendurchmesser an den Außendurchmesser der Ringscheibe 21 angepaßt ist und die mittels Schrauben 31 an letztere angedrückt werden kann, um einen guten Kontakt mit der Ringscheibe herzustellen. Eine abnehmbare Schutzhaube 32 kann lösbar an der die Isolierbuchsen 19 tragenden Seitenwand des Gehäuses 1 vorgesehen sein, um diese und die Erdungsstecker 27 abzudecken.

Sofern eine Fehlerortung an einem der Kabel 10, 11 oder 12 durchgeführt werden soll, werden die Erdungsschalter 7 dieses Kabels und der beiden zum selben System gehörenden Kabel geschlossen und alle zugehörigen Erdungsstecker 27 oder nur derjenige des zu prüfenden Kabels abgezogen. Der Schalter befindet sich dann in dem in Fig. 4 dargestellten Zustand. Nun wird in die Isolierbuchse 19, die dem zu prüfenden Kabel zugeordnet ist, ein Prüfstecker 33 eingesteckt, welcher, wie Fig. 5 zeigt, einen in die Steckbuchse 24 einführbaren Steckerstift sowie im Anschluß an diesen einen elektrisch isolierenden Dichtungskörper aufweist, der einen an den Innenkonus der Isolierbuchse 19 angepaßten Außenkonus hat und deshalb im eingesteckten Zustand die Isolierbuchse 19 elektrisch dicht verschließt. Ein Verbindungsflansch des Prüfsteckers 33 liegt, wenn dieser in die Buchse eingesteckt ist, wie die Kontaktplatte 30 des Erdungssteckers, an der Ringscheibe 21 an. Da der Verbindungsflansch, wie die Kontaktplatte, mit Bohrungen versehen ist, kann der Prüfstecker 33 mittels Schrauben mit der Isolierbuchse 19 verbunden werden. An das zu prüfende Kabel kann nun völlig gefahrlos für die Bedienungsperson eine Prüfspannung angelegt werden.

Selbstverständlich kann man mit mehreren Prüfsteckern auch gleichzeitig alle drei Kabel prüfen. Ferner kann man mittels Stecker, die im Prinzip wie die Prüfstecker 33 ausgebildet sind, an den Isolierbuchsen 19 gefahrlos Strom entnehmen oder auch Strom einspeisen. Beispielsweise kann hierdurch ein Transformator mit Notstrom versorgt werden.

## Patentansprüche

1. Anordnung zur Erdung der stromführenden Teile einer gekapselten Schaltanlage und zur Prüfung der an die Schaltanlage angeschlossenen Kabel, wobei das geerdete Gehäuse der Schaltanlage (1) mit Durchführungen für eine Verbindung von Kabeln (10, 11, 12) mit im Inneren des Gehäuses (1) angeordneten Last- oder Leistungsschaltern (2) versehen ist, denen für jede Phase ein Erdungsschalter (7) zugeordnet ist, von dessen beiden nur bei geschlossenem Erdungsschalter (7) leitend miteinander verbundenen Kontaktstücken (8, 9) das eine (8) ständig mit dem einen Kontaktstück der zugeordneten Phase des Last- oder Leistungsschalters (2) und das andere (9) ständig mit dem einen Ende einer gegenüber dem Gehäuse (1) isolierten Erdungsleitung (17) verbunden ist, die mit ihrem anderen Ende an einem über einen Isolierkörper (18) am Gehäuse befestigten Kontaktkörper angeschlossen ist, der wahlweise mittels einer ihn auf Erdpotential legenden Erdungsvorrichtung oder mittels einer Prüfvorrichtung kontaktierbar ist, dadurch gekennzeichnet, daß der Isolierkörper (18) als Isolierbuchse (19) ausgebildet ist, die an ihrem einen, offenen Ende an der Wand des Gehäuses befestigt ist und auf eine in der Gehäusewand vorgesehene Öffnung ausgerichtet ist, daß die Isolierbuchse (19) im Bereich ihres anderen, im Gehäuseinneren liegenden Endes den als Steckbuchse (24) mit zur Gehäuseöffnung hin gerichteter Stecköffnung ausgebildeten Kontaktkörper aufnimmt und daß die Erdungsvorrichtungen sowie die Prüfvorrichtungen als in diese Steckbuchse (24) einführbarer Erdungsstecker (27) bzw. Prüfstecker (33) ausgebildet sind.

2. Anordnung nach Anspruch 1, dadurch gekennzeichnet, daß die auf je eine der Öffnungen in der Gehäusewand ausgerichteten Isolierbuchsen (19) unter Zwischenlage eines Dichtungsringes (20) gasdicht an der Gehäusewand anliegen und der als Steckbuchse (24) ausgebildete Kontaktkörper gasdicht durch das dem Gehäuseinneren zugewandte Ende der Isolierbuchse (19) hindurchgeführt ist.

3. Anordnung nach Anspruch 1 oder 2, dadurch gekennzeichnet, daß im Bereich der an der Gehäusewand befestigten Stirnseite der Isolierbuchse (19) konzentrisch zu deren Längsachse ein auf Erdpotential liegender Gegenkontaktkörper (21) vorgesehen ist, den der in die Isolierbuchse (19) eingesteckte Erdungsstecker (27) unter Herstellung einer elektrisch leitenden Verbindung mit der Steckbuchse (24) kontaktiert.

4. Anordnung nach Anspruch 3, dadurch gekennzeichnet, daß der Gegenkontaktkörper (21) eine an der Außenseite der Gehäusewand festgelegte Ringscheibe ist und der Erdungsstecker (27) am einen Ende eines elektrisch gut leitenden Bolzens (28) eine an die Ringscheibe andrückbare Kontaktscheibe (30) aufweist, während das andere Ende des Bolzens (28) einen in die Steckbuchse (24) einsteckbaren Steckkontakt trägt.

5. Anordnung nach einem der Ansprüche 1 bis 4, dadurch gekennzeichnet, daß der Prüfstecker (33) im Anschluß an einen in die Steckbuchse (24) einsteckbaren Kontaktbolzen einen Dichtungskörper aufweist, der im eingesteckten Zustand an der Innenwandung der Isolierbuchse (19) anliegt und die Isolierbuchse nach außen hin dicht verschließt.

## Claims

1. Arrangement for earthing current-carrying parts of an encapsulated switching apparatus and for checking the cables attached thereto, whereby the earthed housing of the switching apparatus (1) is provided with inlets for connection of cables (10, 11, 12) with loading or power switches (2) disposed inside the housing, to which switches (2) an earthing switch (7) is associated for each phase, of the contact pieces (8, 9) of said earthing switch (7), which are conductively connected to one another only when the earthing switch (7) is closed, one (8) is always connected to one of the contact pieces of the associated phase of the loading or power switch (2) and the other (9) is always connected to one end of an earth cable insulated from the housing (1), which cable is attached by its other end to a contact body fixed to the housing via an insulating body (18), which body is selectively contactable of an earthing device bringing it to earth potential or by a testing device, characterised in that the insulating body (18) is formed as an insulating sleeve (19) which is fixed at its one end, which is open, to the wall of the housing and is aligned to an opening provided in the housing wall, in that the insulating sleeve (19), in the region of its other end, which is inside the housing, includes the contact body which is formed as a socket (24) with its insertion opening directed towards the housing opening, and in that both the earthing device and the testing device are formed as an earthing plug (27) and a testing plug (33) respectively insertable into this socket (24).

2. Arrangement according to claim 1, characterised in that the insulating sleeves (19), aligned to each one of the openings of the housing wall, are gas-tight fits on the housing wall by the interposition of a sealing ring (20) and the contact body formed as a socket (24) passes gas-tight trough the end of the insulating sleeve (19) facing the interior of the housing.

3. Arrangement according to claim 1 or 2, characterised in that in the region of the end surface of the insulating sleeve (19) fixed to the housing wall, concentrically with its longitudinal axis there is provided a counter-contact body (21) at earth potential, which is contacted by the earthing plug (27), inserted into the insulating socket (19) with formation of an electrically conductive connection.

4. Arrangement according to claim 3, characterised in that the counter-contact body (21) is a ring section fixed in the outside of the housing wall and the earthing plug (27) on the first end or an electrically highly conductive bolt (28) has a contact section (30) which can be pressed on to the ring section, whilst the other end of the bolt (28) carries a plug contact which can be inserted into the socket (24).

5. Arrangement according to any one of claims 1 to 4, characterised in that the testing plug (33) has a sealing body next to a contact bolt which is insertable into the socket (24), which body is located in an inserted condition on the inside wall of the insulating sleeve (19) and sealingly closes the insulating sleeve to the outside.

## Revendications

1. Dispositif pour la mise à la terre de parties conductrices d'une installation blindée de distribution, et pour le contrôle des câbles raccordés à ladite installation, le boîtier d'installation (1) mis à la terre muni des traversées pour la connexion entre des commutateurs de puissance (2) dans le boîtier et des câbles (10, 11, 12) quels commutateurs de puissance (2) pour chaque phase est associé un commutateur de terre (7), dont les deux plots de contact respectifs laissent passer le courant lorsque ledit commutateur de terre (7) est fermé, l'un (8) desdits plots étant relié permanent au contact de phase associé du commutateur de puissance, tandis que l'autre (9) est relié à l'un extrémité d'une ligne de terre isolée (17) par rapport au boîtier, l'autre extrémité de ladite ligne de terre (17) se raccordant à un organe de contact fixé au boîtier par un corps isolant (18), lequel organe de contact peut être raccordé facultativement soit à un ensemble de mise à la terre, soit à un dispositif de contrôle, caractérisé par le fait que le corps isolant (18) est formé comme un manchon isolant (19) dont une extrémité ouverte est fixé à la paroi du boîtier et alignée sur une ouverture ménagée dans la paroi du boîtier, tandis que l'autre extrémité, intérieure audit boîtier, reçoitcoaxialement une douille (24) formant ledit organe de contact, et par le fait que l'ensemble de mise à la terre et le dispositif de contrôle sont réalisés en prise de terre (27), respectivement de test (33) insérable dans ladite douille (24).

2. Dispositif selon la revendication 1, caractérisé par le fait que chaque manchon isolant (19) aligné sur chacune des ouvertures dans la paroi du boîtier est disposé contre la paroi adjacente de l'ouverture correspondante du boîtier, par l'intermédiaire d'une garniture étanche aux gaz, et par le fait que la douille (24) formant l'organe de contact traverse l'extrémité du manchon isolant (19) qui est intérieure au boîtier de façon également étanche aux gaz.

3. Dispositif selon l'une des revendications 1 ou 2, caractérisé par le fait que dans la zone de l'extrémité de manchon isolant fixée à la paroi du boîtier est prévu un organe de contact associé (21) concentrique à l'axe longitudinal du manchon et mis à la terre, ledit organe de contact associé (21), est électriquement relié à la douille (24) par l'intermédiaire de la prise de terre (27) insérée.

4. Dispositif selon la revendication 3, caractérisé par le fait que l'organe de contact associé (21) est une couronne en contact par un de ses faces avec la paroi extérieure du boîtier auquel elle est fixée, et par le fait que la prise de terre (27), présente, à une extrémité d'une tige conductrice, un disque de contact (30) maintenu contre ladite couronne, tandis que l'autre extrémité porte un contact enfichable dans la douille (24).

5. Dispositif selon l'une des revendications 1 à 4, caractérisé par le fait que la prise de test (33) porte un organe d'étanchéité suivant à la tige de contact s'insérant dans la douille (24), ledit organe venant en contact avec la surface intérieure du manchon isolant (19) et fermant étanchement le manchon isolant vers l'extérieur.

Fig.1.

Fig.2.

Fig.3.

_Fig.4._

_Fig.5._